# EUROPEAN PATENT APPLICATION

(11) **EP 1 662 289 A1**
(43) Date of publication of application: **31.05.2006**
(21) Application number: 05109181.7
(22) Date of filing: 04.10.2005
(51) Int. Cl.: G02B 26/08, G03B 21/00, H04N 5/74, H04N 5/57

(54) **Projection apparatus comprising a brightness contol device**

(30) Priority: 26.11.2004 KR 2004098144
(71) Applicant: Samsung Electronics Co., Ltd., Suwon-si, Gyeonggi-Do (KR)
(72) Inventor: Kim, Kwan-heung 915-502, Byeokjeokgol 9danji, Suwon-si Gyeonggi-do (KR); Kim, Jin-sik 541-1802, Sinnamusil Ssangyong Apt, Suwon-si Gyeonggi-do (KR)
(74) Representative: Read, Matthew Charles

(57) **Abstract**

An optical engine for a projection apparatus, according to an embodiment of the present invention, comprises an image data input unit, an optical source, an image generator, a projector which projects an image produced by the image generator and light reflected from the image generator onto a screen, an iris unit which controls the quantity of light passing through the projector, and a controller that regulates the optical source, the image generator, and the iris unit based on image data input by the image data input unit. The quantity of light passing through the iris unit can be varied to improve the brightness of the image being projected onto the screen.

## Description

The present invention relates to an optical engine for a projection apparatus.

Generally, projection apparatus, such as projection televisions and projectors, project a generated image onto a plane of incidence, such as a screen, to form a large image.

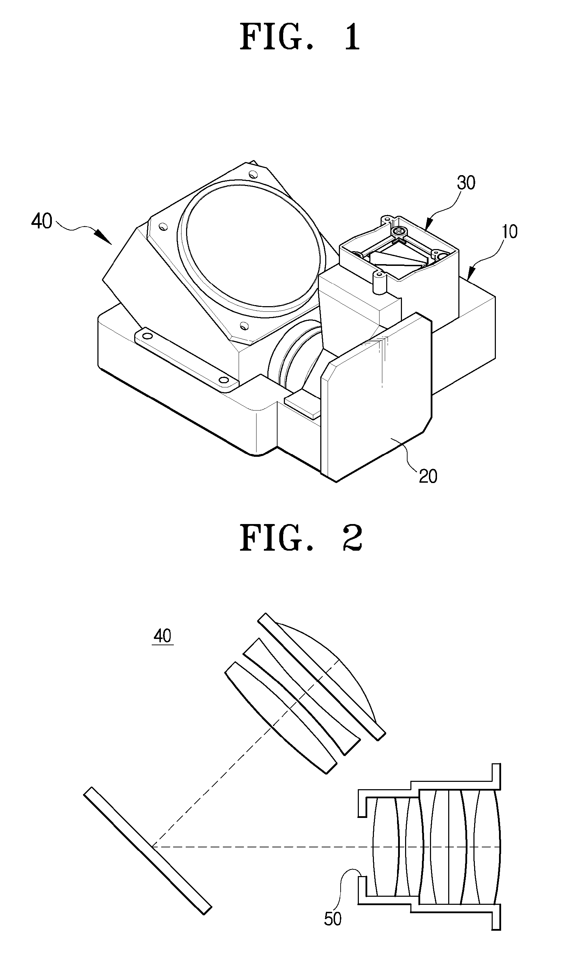

Referring to Figure 1, a conventional optical engine of a projection apparatus comprises an optical source 10, an image generator 20, a guiding unit 30 and a projector 40.

The optical source 10, such as a lamp, is disposed on one side of the image generator 20 to project light towards the image generator 20. The guiding unit 30 guides the light generated by the optical source 10 towards the image generator 20.

Image information is input into the image generator 20 through a liquid crystal display (LCD), liquid crystal on silicon (LCoS) or a digital micromirror device (DMD) and thereby generates a predetermined image. Recently, the DMD device has been the most developed and widely spread since it has superior light utilization efficiency, as compared to the other devices.

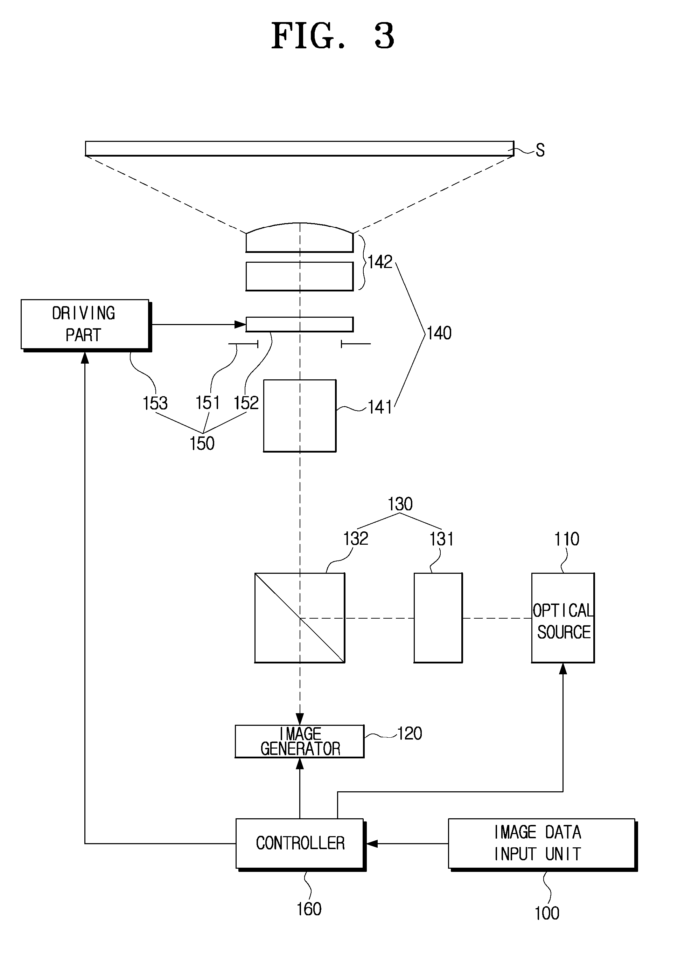

The projector 40 magnifies the image produced by the image generator 20 and light projected from the optical source 10 and projects the image and the light onto a screen (not shown). To accomplish this, the projector 40 has a plurality of lenses and is mounted on the front of the image generator 20. As shown in Figure 2, the projector 40 is provided with irises 50 among the lenses to interrupt ineffective light by restricting the quantity of the light passing through the lenses. In other words, the iris 50 determines a contrast ratio (maximum brightness /minimum brightness) by restricting the quantity of the light projected to the screen (not shown).

However, since a fixed iris is used for the iris 50, the contrast ratio is set as a fixed value when the projection apparatus is initially designed, and the quantity of the light cannot be properly adjusted in accordance with changeable image data. Therefore, the definition of the image being projected onto the screen is degraded.

The present invention seems seeks to provide an improved optical engine.

According to a first aspect of the present invention there is provided an optical engine for projection apparatus, the optical engine including means for stopping light configured to variably control light passing through the projector dependent on image data.

The optical engine may comprise a controlling means. The controlling means may be configured to control the light-stopping means. The controlling means may be configured to determine a degree of aperture opening in association with image brightness and to amplify the image. The controlling means may be configured to open the aperture proportionally to image brightness and to amplify the image inversely proportion to the image brightness.

The light-stopping means may comprise an iris having an aperture, a shutter member movably mounted to control the size of the aperture; and a driving part configured to move the shutter member. The driving part may be a voice coil motor (VCM) which magnetically operates the shutter.

The optical engine may comprise means for receiving image data, means for producing light, means for generating an image, means for projecting an image onto a screen and controlling means.

The controlling means may be configured to control the light-producing means and the image-generating means. The image-generating means may be a digital micromirror device (DMD) comprising a plurality of independently driven micromirrors. The controlling means may be configured to amplify an image by controlling the on/off time of the plurality of micromirrors of the DMD.

According to a second aspect of the present invention there is provided a projection apparatus comprising an optical engine. The projection apparatus may further comprise a screen for receiving an image.

According to a third aspect of the present invention there is provided an optical engine comprising an image data input unit, an optical source, an image generator, a projector which projects an image produced by the image generator and light reflected from the image generator onto a screen, an iris unit which controls the quantity of light passing through the projector, and a controller that regulates the optical source, the image generator, and the iris unit based on image data input by the image data input unit.

The iris unit may comprise a fixed iris having an aperture for a predetermined amount of light to pass through; a movable shutter member to control the size of the aperture; and a driving part controlled by the controller to move the shutter member.

The controller may determine the degree of aperture opening in association with image brightness input by the image data input unit and amplifies the image.

The controller may open the aperture in proportion to the image brightness and amplifies the image in inverse proportion to the image brightness.

The image generator may be implemented by a digital micromirror device (DMD) comprising a plurality of micromirrors which are independently driven by pixel.

The controller may amplify an image signal by controlling on/off time of the plurality of micromirrors of the DMD.

The driving part may be implemented by a voice coil motor (VCM) which magnetically operates the shutter according to the signal input by the controller.

According to a fourth aspect of the present invention there is provided a projection apparatus comprising an image data input unit, an optical source, an image generator, a projector which expands (preferably by a predetermined magnification) and projects an image produced by the image generator and light reflected from the image generator onto a screen, a screen onto which the expanded image and the light are projected, an iris unit which controls quantity of the light passing through the projector, and a controller that regulates the optical source, the image generator, and the iris unit based on image data input by the image data input unit.

According to a fifth aspect of the present invention there is provided a method for controlling an optical engine of a projection apparatus comprising the steps of projecting a generated light and image onto a screen, and controlling the contrast ratio of the image being projected onto the screen.

The controlling step may comprise the steps of obtaining image brightness from input image data, controlling the quantity of the light being projected onto the screen based on the obtained image brightness, and controlling the brightness of the generated image based on the obtained image brightness.

The step of controlling the quantity of the light may further comprise a step of opening an aperture for the light to be projected to be passed through in proportion to a minimum value of the image brightness.

The step of controlling image brightness may further comprise a step of amplifying the image in inverse proportion to the minimum value of the image brightness.

Embodiments of the present invention will now be described, by way of example, with reference to Figures 3 to 8 of the accompanying drawings in which:
Figure 1 is a perspective view of a conventional optical engine for a projection apparatus;
Figure 2 is a schematic, sectional view of a projector of the optical engine of Figure 1;
Figure 3 is a schematic view of an embodiment of an optical engine for a projection apparatus according to the present invention;
Figure 4 is a perspective view of a projector and an iris unit of the optical engine shown in Figure 3;
Figures 5 to 7 are front views schematically illustrating the operation of the iris unit of Figure 4; and
Figure 8 is a flowchart of a method for controlling an optical engine in accordance with the present invention.

Figure 3 schematically shows an embodiment of an optical engine for a projection apparatus in accordance with the present invention. The optical engine comprises an optical source 110 (means for producing light), an image generator 120 (means for generating an image), a guiding unit 130 (means for guiding light), a projector 140 (means for projecting an image), an iris unit 150 (means for stopping light) and a controller 160 (controlling means). Reference numeral 100 refers to an image data input unit (means for receiving image data) which is input with predetermined image data from an outside source.

The optical source 110 is driven by the controller 160 to project a predetermined amount of light. The light is guided to the guiding unit 130. A general lamp such as halogen lamp can be used for the optical source 110.

The image generator 120 is disposed inside the projection apparatus to form a predetermined image using the image data input at the image data input unit 100. Preferably, the image generator 120 is a digital micromirror device (DMD) comprising a plurality of micromirrors which are independently operated by pixel. The DMD projects an image signal by turning on and off the plurality of micromirrors and amplifies the image by adjusting the on/off time of the micromirrors.

The guiding unit 130 comprises an optical guiding member 131 and a prism member 132 to guide the light projected from the optical source 110. More specifically, the optical guiding member 131 guides the light projected from the optical source 110 to the prism member 132, and the prism member 132 guides the light to the image generator 120. The light guided to the image generator 120 is reflected back to the prism member 132 and guided to the projector 140, together with the image generated at the image generator 120.

The projector 140 is disposed on the front of the image generator 120 and projects the image generated at the image generator 120 and light reflected by the image generator 120 onto a screen S. The projector 140 comprises a front-group lens part 141 and a rear-group lens part 142 for expanding the image and the light to the size of the screen S. Preferably, the front-group lens part 141 and the rear-group lens part 142 are formed by a plurality of lenses, which may comprise concave lenses or convex lenses.

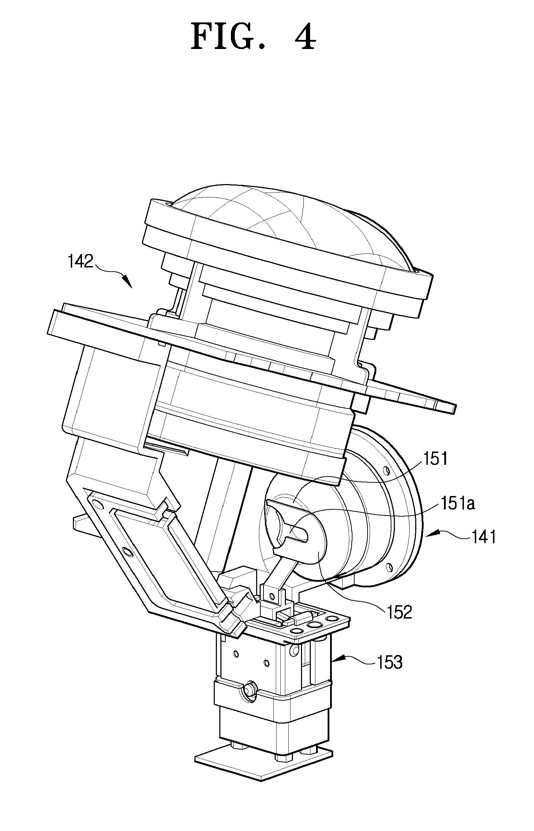

As shown in Figure 4, the iris unit 150 comprises a fixed iris 151, a shutter member 152, and a driving part 153. The iris unit 150 is disposed between the front-group lens part 141 and the rear-group lens part 142. The iris unit 150 determines the contrast ratio by adjusting the quantity of light projected onto the screen S. The contrast ratio refers to the ratio between the maximum brightness in a white area and the minimum brightness in a black area.

The fixed iris 151 includes an aperture 151a so that a certain amount of the light passing through the prism 132 can be passed through the iris. The size of the aperture 151a is determined during manufacturing.

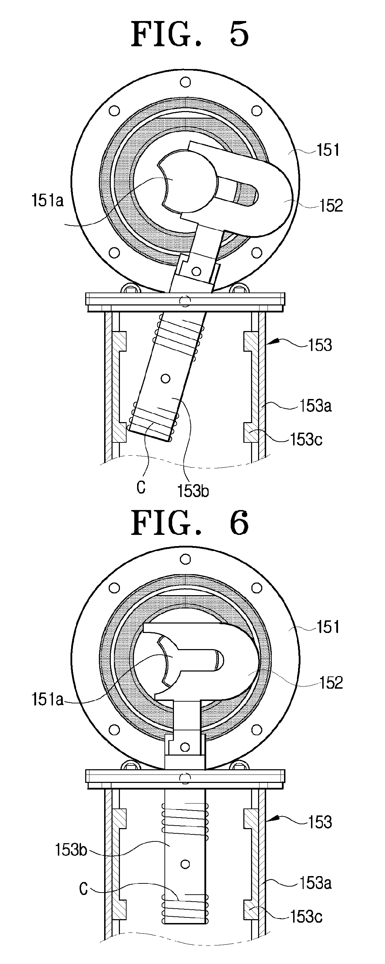

The shutter member 152 is movably mounted adjacent to the aperture 151a to vary the quantity of the light that passes through the aperture 151a of the fixed iris 151. As shown in Figures 5 to 7, the shutter member 152 covers the aperture 151a in varying amounts, but the centre portion of the aperture 151a is always kept open.

The driving part 153 supports one end of the shutter member 152 and drives the shutter member 152. As shown in Figures 5 to 7, a voice coil motor (VCM) which magnetically relocates the shutter member 152 may be employed for the driving part 153. The VCM is connected to the shutter member 152 and comprises a driving member 153b pivoting within a case 153a and a magnet 153c which enclose the driving member 153b without contact. In the illustrated embodiment, the driving member 153b is wound by coil.

The driving part 153 can be any suitable device and is not limited to the VCM. For example, a solenoid or a cam motor can be used for the driving part 153 to drive the shutter member 152 in accordance with an electric signal from the controller 160.

The controller 160 regulates the iris unit 150, the optical source 110, and the image generator 120 based on the image data input at the image data input unit 100. The controller 160 determines the degree of opening of the aperture 151a in association with image brightness B input at the image data input unit 100 and amplifies the image.

In other words, the controller 160 varies the quantity of light by opening the aperture 151 a in proportion to the image brightness B and amplifies the image in inverse proportion to the image brightness B.

The controller 160 changes the quantity of the light and amplification of the image simultaneously to adjust the brightness, which varies according to the amplification of the image.

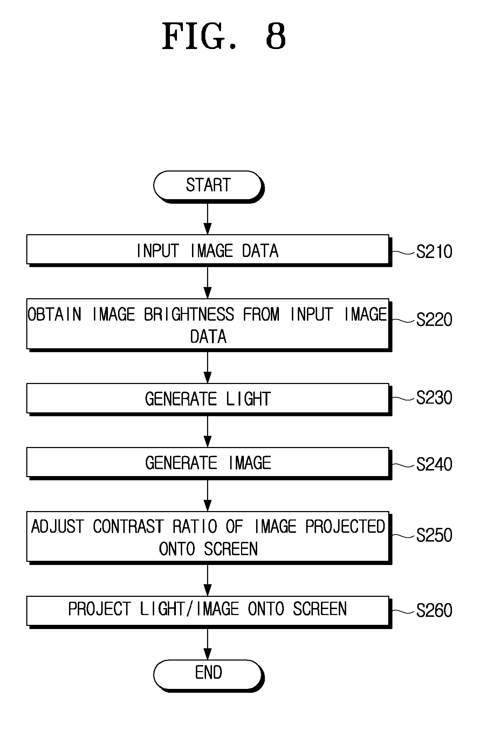

The operations of the above-structured optical engine of a projection apparatus will now be described with reference to Figures 5 through 8. As shown in Figure 8, image data is input from the image data input unit 100 (S210). The image brightness B is obtained from the input image data (S220) and compared to a preset reference value.

The reference value is the image brightness of the image passing through the aperture 151a when the aperture 151a of the fixed iris 151 is completely opened, as shown in Figure 5. For example, with the aperture 151a completely opened, a minimum value of the image brightness B of the image passing through the aperture 151a is set to "1" while a maximum value is set to "1000".

Then, a light is generated by the optical source 110 (S230) and an image is generated based on the input image data (S240). Upon generation of the light and the image, the brightness ratio of the image being projected onto the screen S is adjusted (S250). Here, the contrast ratio is controlled by adjusting the brightness of the light and the image projected onto the screen S based on the obtained image brightness B. Also, the brightness of the image can be adjusted by the controller 160 at the moment of generating the image.

The above processes will be described in greater detail with reference to Figures 5 through 7.

In order to control the quantity of the light being projected to the screen S, the aperture 151a which the light is passed through is opened in proportion to the minimum value of the image brightness B. Herein, a total area of the aperture 151 a is set to "1".

To control the brightness of the image being projected to the screen S, the image is amplified in inverse proportion to the minimum value of the image brightness (1/minimum value of image brightness).

Figure 5 illustrates a position of the shutter member 152 when the minimum value of the image brightness B is "1" while the maximum value is "1000." As shown in Figure 5, when the controller 160 detects the minimum value of image brightness is "1" while the maximum value is "1000," the shutter member 152 under control of the controller 160 opens the aperture 151a by "1" and amplifies the image produced by the image generator 120 by "1." Therefore, the total area of the aperture 151a is completely opened without amplifying the image. Accordingly, the contrast ratio of the image being projected to the screen S becomes 1000:1.

Figure 6 illustrates the position of the shutter member 152 when the minimum value of the image brightness B is "0.5" while the maximum value is "500." As shown in Figure 6, when the controller 160 detects the image brightness is "0.5," the shutter member 152 under control of the controller 160 opens the aperture 151 a by "0.5" and amplifies the image by "1/0.5". Accordingly, only 50% of the aperture 151a is opened by the shutter member 152 while the image is amplified twice as much. As a result, the contrast ratio of the image being projected to the screen S becomes 1000:0.5, that is, 2000:1. Thus, the contrast ratio is increased twice as much as the initial value by opening only 50% of the aperture 151a and amplifying the image twice by the controller 160.

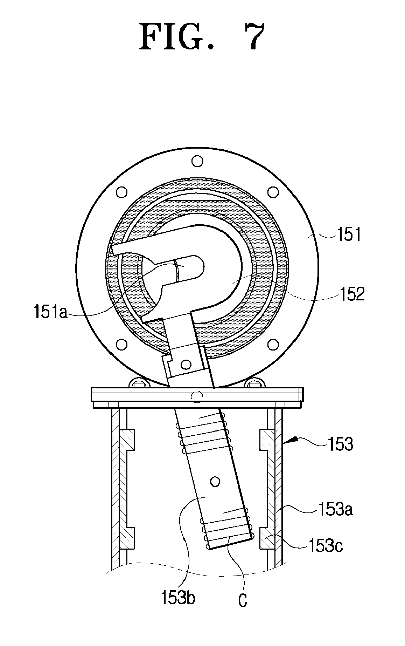

Figure 7 illustrates the position of the shutter member 152 when the minimum value of the image brightness B is "0.25" while the maximum value is "250." As shown in Figure 7, when the controller 160 detects the image brightness is "0.25," the shutter member 152 under control of the controller 160 opens the aperture 151a by "0.25" and amplifies the image by "1/0.25." Accordingly, only 25% of the aperture 151a is opened by the shutter member 152 while the image is amplified four times as much. As a result, the contrast ratio of the image being projected to the screen S becomes 1000:0.25, that is, 4000:1. Thus, the contrast ratio is increased four times as much as the initial value by opening only 25% of the aperture 151a and amplifying the image four times by the controller 160.

When the minimum value of the image brightness B is zero (0), the image is not amplified despite attempted amplification of the image by the controller 160. This is because the minimum value of "0" is not affected by amplification of the image signal.

After the above processes, the image and the light are projected onto the screen S via the projector 140 (S260).

Thus, the quantity of the light passing through the iris unit 150 is varied, thereby improving the contrast ratio of the image being projected onto the screen S.

As can be appreciated from the above description, according to an embodiment of the present invention, the quantity of the light passing through the iris unit 150 is varied at the same time as the image is amplified. Therefore, the brightness, which is reduced due to the varied quantity of light, can be compensated for. Consequently, the contrast ratio can be improved without influencing the image, thereby also improving definition of the image.

While the invention has been shown and described with reference to certain embodiments thereof, it will be understood by those skilled in the art that various changes in form and details may be made therein without departing from the scope of the invention as defined by the appended claims.

## Claims

1. An optical engine for projection apparatus, said optical engine including means (150) for stopping light **characterised in that** said light-stopping means is configured to variably control light passing through the projector dependent on image data.

2. An optical engine according to claim 1, comprising controlling means (160).

3. An optical engine according to claim 2, said controlling means configured to control the light-stopping means (150).

4. An optical engine according claim 2 or 3, wherein the controlling means (160) is configured to determine a degree of aperture opening in association with image brightness and to amplify the image.

5. An optical engine according to any one of claims 2 to 4, wherein the controlling means (160) is configured to open the aperture proportionally to image brightness and to amplify the image inversely proportion to the image brightness.

6. An optical engine according to any preceding claim, wherein the light-stopping means comprises:
an iris (151) having an aperture;
a shutter member (152) movably mounted to control the size of the aperture; and
a driving part (153) configured to move the shutter member.

7. An optical engine according to claim 6, wherein
the driving part is a voice coil motor (VCM) which magnetically operates the shutter.

8. An optical engine according to any preceding claim, comprising:
means (100) for receiving image data;
means (110) for producing light;
means (120) for generating an image;
means (140) for projecting an image onto a screen; and
controlling means (160).

9. An optical engine according to claim 8, wherein the controlling means (160) is configured to control the light-producing means (110) and the image-generating means (120).

10. An optical engine according to claim 8 or 9, wherein
the image-generating means (120) is a digital micromirror device (DMD) comprising a plurality of independently driven micromirrors.

11. An optical engine according to claim 10, wherein
the controlling means (160) is configured to amplify an image by controlling the on/off time of the plurality of micromirrors of the DMD.

12. A projection apparatus comprising an optical engine according to any preceding claim.

13. A projection apparatus according to claim 12, further comprising a screen (S) for receiving an image.

14. An optical engine of a projection apparatus, comprising:
an image data input unit;
an optical source;
an image generator;
a projector which projects an image produced by the image generator and a light reflected from the image generator onto a screen;
an iris unit which controls the quantity of the light passing through the projector; and
a controller that regulates the optical source, the image generator, and the iris unit based on image data input by the image data input unit.

15. The optical engine of claim 14, wherein the iris unit comprises:
a fixed iris having an aperture for a predetermined amount of light to pass through;
a shutter member movably mounted to control the size of the aperture; and
a driving part controlled by the controller to move the shutter member.

16. The optical engine of claim 15, wherein
the controller determines the degree of aperture opening in association with image brightness input by the image data input unit and amplifies the image.

17. The optical engine of claim 16, wherein
the controller opens the aperture in proportion to the image brightness and amplifies the image in inverse proportion to the image brightness.

18. The optical engine of claim 14, wherein
the image generator is a digital micromirror device (DMD) comprising a plurality of micromirrors which are independently driven by pixel.

19. The optical engine of claim 18, wherein
the controller amplifies an image by controlling the on/off time of the plurality of micromirrors of the DMD.

20. The optical engine of claim 15, wherein
the driving part is a voice coil motor (VCM) which magnetically operates the shutter according to signals from the controller.

21. A projection apparatus comprising:
an image data input unit;
an optical source;
an image generator;
a projector which expands by a predetermined magnification and projects an image produced by the image generator and a light reflected from the image generator onto a screen;
a screen onto which the expanded image and the light are projected;
an iris unit which controls the quantity of the light passing through the projector; and
a controller that regulates the optical source, the image generator, and the iris unit based on image data input by the image data input unit.

22. The projection apparatus of claim 21, wherein the iris unit comprises:
a fixed iris having an aperture for a predetermined amount of light to pass through;
a shutter member movably mounted to control the size of the aperture; and
a driving part controlled by the controller to move the shutter member.

23. The projection apparatus of claim 22, wherein
the controller determines the degree of aperture opening in association with image brightness input by the image data input unit and amplifies the image.

24. The projection apparatus of claim 23, wherein
the controller opens the iris in proportion to the image brightness and amplifies the image in inverse proportion to the image brightness.

25. The projection apparatus of claim 21, wherein
the image generator is a digital micromirror device (DMD) comprising a plurality of micromirrors which are independently driven by pixel.

26. The projection apparatus of claim 25, wherein
the controller amplifies an image by controlling the on/off time of the plurality of micromirrors of the DMD.

27. The projection apparatus of claim 25, wherein
the driving part is a voice coil motor (VCM) which magnetically operates the shutter according to signals from the controller.

28. A method for controlling an optical engine of a projection, comprising the steps of:
generating a light;
generating an image based on input image data;
projecting the generated light and image onto a screen; and
controlling the contrast ratio of the image being projected onto the screen.

29. The method of claim 28, wherein the controlling step comprises the steps of:
obtaining image brightness from input image data;
controlling the quantity of the light being projected onto the screen based on the obtained image brightness; and
controlling the brightness of the generated image based on the obtained image brightness.

30. The method of claim 29, wherein the step of controlling the quantity of the light further comprises a step of:
opening an aperture for the light to be projected to be passed through in proportion to minimum value of the image brightness.

31. The method of claim 30, wherein the step of controlling the image brightness further comprises a step of:
amplifying the image in inverse proportion to the minimum value of the image brightness.
